# EUROPEAN PATENT SPECIFICATION

(11) **EP 2 266 221 B1**
(45) Date of publication and mention of the grant of the patent: **27.01.2016**
(21) Application number: 09729418.5
(22) Date of filing: 05.03.2009
(51) Int. Cl.: H04B 7/08

(54) **Apparatus and methods for processing two signals and determining next processed signal**
Vorrichtungen und Verfahren zur Verarbeitung zweier Signale und Bestimmung des weiter zu verarbeitenden Signals
Appareils et procédés de traitement des deux signaux et la détermination de la prochaine signal traité

(30) Priority: 10.04.2008 GB 0806526; 10.04.2008 US 82687
(43) Date of publication of application: 29.12.2010
(73) Proprietor: Nokia Technologies Oy, 02610 Espoo (FI)
(72) Inventor: SYRJARINNE, Jari Tapani, FI-33700 Tampere (FI); ALANEN, Kimmo Marko Tapani, FI-37500 Lempäälä (FI)
(74) Representative: Swindell & Pearson Limited
(86) International application number: PCT/EP2009/052601
(87) International publication number: WO 2009/124811

(56) References cited:
- EP-A- 0 961 512
- EP-A- 0 978 781
- EP-A- 1 432 156
- US-A- 5 678 169
- US-A- 5 722 053
- US-A- 5 960 046

## Description

### FIELD OF THE INVENTION

Embodiments of the present invention relate to apparatus, methods and computer programs. In particular, they relate to apparatus, methods and computer programs in a mobile cellular telephone.

### BACKGROUND TO THE INVENTION

Apparatus, such as mobile cellular telephones, may comprise a plurality of antenna elements and/or be operable to receive a plurality of signals in different operational frequency bands and different protocols. The reception performance may be different for each of the antenna elements and the quality of signals in different operational frequency bands and protocols may also vary.

For example, where an apparatus includes a plurality of antenna elements, the reception performance of one or more of the antenna elements may be affected by the orientation of the apparatus (and hence the orientation of the antenna elements) relative to the source of the signals. Additionally, the reception performance of an antenna element may be affected by the proximity of objects to the antenna element which electromagnetically couple to the antenna element and cause interference.

An apparatus may be configured to read and process only one received signal at a given time. Consequently, the apparatus may not always be receiving from the antenna element which has the best reception performance or be receiving at the best operational frequency band.

D1 (EP 0961512) relates to a method of performing handover of a call in a duplex radio communication system comprising radio access units and at least one remote radio communication unit. The radio access units and the or each remote radio communication unit are arranged for establishing a call at a radio link between a remote radio communication unit and a radio access unit, which radio link is selected from a plurality of predetermined radio links A call in progress at a first radio link between a remote radio communication unit and a first radio access unit to a second radio link between the remote radio communication unit and a second radio access unit subject to periodically measured radio link criteria between the remote radio communication unit and the second radio access units exceeding in performance periodically measured radio link criteria between the remote radio communication unit and the first radio access unit. The handover is performed and completed if the measured radio link criteria between the radio communication unit and the second radio access unit exceed in performance the measured radio link criteria between the remote radio communication unit and the first radio access unit for at least two consecutive periodic radio link criteria measurements.

D2 (US5722053) relates to a dual band code division multiple access radio that operates on multiple frequencies simultaneously on either transmit or receive. The transmit path operates by splitting the transmit intermediate frequency (IF) path and mixing the IF to two different transmit frequencies using two frequency synthesizers. The receive path has two RF channels that are mixed with the frequencies generated by the synthesizers and summed into one IF strip. Thus the radio of the present invention can perform a soft hand-off between frequencies while communicating with both base stations simultaneously. Additional mixing paths and synthesizers can be added if it is desired to communicate with more than two base stations simultaneously.

D3 (EP1432156) relates to monitoring alternative frequencies during the reception of a broadcast signal at a present frequency. Whenever the broadcast signal at an alternative frequency is checked, the receiver's gain is instantaneously switched from a present gain value corresponding to the present frequency to a second gain value corresponding to the alternative frequency. Said second gain value is adapted to the supposed signal strength of the broadcast signal at the alternative frequency.

D4 (US 5678169) relates to an improved navigation satellite receiver with a super heterodyne receiver channel configured to provide a first local oscillator frequency between L1 and L2 such that the down converted intermediate frequencies of L1 and L2 can be processed by the same intermediate frequency stages and a second mixer stage. A radio frequency (RF) selector switch is provided to select between inputting L1 and L2 to the first mixer. The RF switch is controlled by a digital signal processor (DSP) that also provides automatic gain control (AGC) to an intermediate frequency amplifier. Histories and expected levels of AGC for each of L1 and L2 are maintained by the DSP. The RF switch is briefly toggled over to select one of L1 or L2, while tracking a satellite on the other carrier frequency, just long enough to sample the AGC level needed. If the level is too high, given the histories and expectations for such levels, the sampled carrier frequency is assumed to be jammed, and a high risk for switching over. A switch to the sampled L1 or L2 carrier frequency is therefore prevented, which saves satellite tracking from being temporarily or permanently lost.

D6 (US 5,960,046) relates to a selection diversity system and method for use in a TDMA (time division multiple access) radio system, particularly suited for DECT (Digital Enhanced Cordless Telephone) applications, in which a single receiver makes a performance measurement on each of two antennas in sequence during the beginning of a received data burst, the beginning of the burst being determined by a timing signal fed back from a previous burst. A slicing level used in the receiver to perform threshold detection is continuously improved during the measurements of the two antennas, but held while switching between the antennas. The previously unused antenna is measured first to minimize the likelihood of having to perform two antenna switches.

Therefore, it would be desirable to provide an alternative apparatus.

### BRIEF DESCRIPTION OF VARIOUS EMBODIMENTS OF THE INVENTION

According to various, but not necessarily all, embodiments of the invention there is provided a method as claimed in claim 1.

The method may comprise determining a parameter indicative of the quality of the first signal while processing the first signal at the first processing frequency.

The method may comprise switching from processing the second signal to processing the first signal within the first processing time period measured from the last instance of processing the first signal at the first frequency. The method may comprise determining a parameter indicative of the quality of the first signal.

The method may further comprise controlling a display to display navigational information using the selected signal.

The method may further comprise receiving the first and second signals via a single antenna element. The first signal may be in a first operational frequency band and the second signal may be in a second operational frequency band, different to the first operational frequency band.

The method may further comprise controlling a tuner to adapt the resonant frequency band of the antenna element between the first operational frequency band and the second operational frequency band.

The method may further comprise receiving the first signal from a first antenna element and receiving the second signal from a second antenna element.

The method may further comprise controlling a switch to switch between connecting to the first antenna element and to the second antenna element to receive the first signal or second signal respectively.

The first signal and the second signal may be in the same operational frequency band.

The method may further comprise controlling a first tuner to adapt the resonant frequency band of the first antenna element between a first operational frequency band and a second operational frequency band. The method further comprise controlling a second tuner to adapt the resonant frequency band of the second antenna element between a first operational frequency band and a second operational frequency band.

According to various, but not necessarily all, embodiments of the invention there is provided an apparatus as claimed in claim 10.

The apparatus may be for communication and may be for wireless communication.

The second controller module may be configured to determine a parameter indicative of the quality of the first signal while the first controller module is processing the first signal at the first processing frequency.

The second controller module may be configured to control switching from processing the second signal to processing the first signal within the first processing time period measured from the last instance of processing the first signal at the first frequency, and is configured to determine a parameter indicative of the quality of the first signal.

The apparatus may further comprise a display. The controller may be configured to control the display to display navigational information using the selected signal.

The apparatus may further comprise a single antenna element configured to receive the first and second signals. The first signal may be in a first operational frequency band and the second signal may be in a second operational frequency band, different to the first operational frequency band. The apparatus may further comprise a tuner configured to adapt the resonant frequency band of the antenna element between the first operational frequency band and the second operational frequency band. The second controller module may be configured to control the tuner.

The apparatus may further comprise a first antenna element configured to receive the first signal and a second antenna element configured to receive the second signal.

The apparatus may further comprise a switch configured to switch between connecting to the first antenna element and to the second antenna element to receive the first signal or second signal respectively. The second controller module may be configured to control the switch.

The first signal and the second signal may be in the same operational frequency band.

The apparatus may further comprise a first tuner configured to adapt the resonant frequency band of the first antenna element between a first operational frequency band and a second operational frequency band. The second controller module may be configured to control the first tuner.

The apparatus may further comprise a second tuner configured to adapt the resonant frequency band of the second antenna element between a first operational frequency band and a second operational frequency band. The second controller module may be configured to control the second tuner.

According to various, but not necessarily all, embodiments of the invention there is provided a computer program as claimed in claim 14.

According to various, but not necessarily all, embodiments of the invention there is provided a computer program product directly loadable into a memory of a digital computer, comprising the computer program described in the preceding paragraphs.

According to various, but not necessarily all, embodiments of the invention there is provided a module comprising an apparatus as described in any of the preceding paragraphs.

According to various, but not necessarily all, embodiments of the invention there is provided a chipset comprising an apparatus as claimed in any of the preceding paragraphs.

### BRIEF DESCRIPTION OF THE DRAWINGS

For a better understanding of various examples of embodiments of the present invention reference will now be made by way of example only to the accompanying drawings in which:
Fig. 1 illustrates a schematic diagram of an apparatus according to various embodiments of the present invention;
Fig. 2 illustrates a flow chart of a method for the apparatus illustrated in Fig. 1 according to various embodiments of the present invention;
Fig. 3 illustrates a time chart for processing a first signal and a second signal according to various embodiments of the present invention;
Fig. 4 illustrates a schematic diagram of another apparatus according to various embodiments of the present invention;
Fig. 5 illustrates a flow chart of a method for the apparatus illustrated in Fig. 4 according to various embodiments of the present invention;
Fig. 6 illustrates a schematic diagram of a further apparatus according to various embodiments of the present invention; and
Fig. 7 illustrates a flow chart of a method for the apparatus illustrated in Fig. 6 according to various embodiments of the present invention.

### DETAILED DESCRIPTION OF VARIOUS EMBODIMENTS OF THE INVENTION

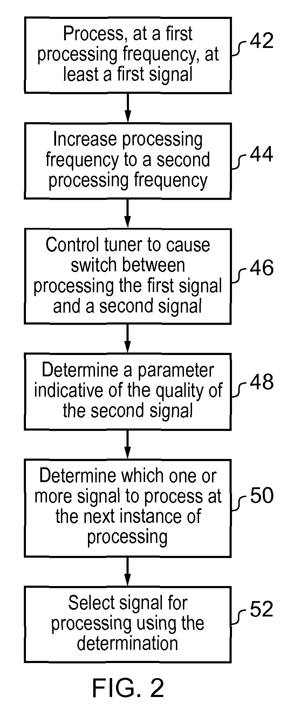

Figures 2, 5 and 7 illustrate a method comprising: processing at a first processing frequency, such that each instance of processing is separated by a first processing time period, at least a first signal 38; increasing the processing frequency to a second processing frequency and switching from processing the first signal 38 to processing a second signal 40; determining a parameter indicative of the quality of the second signal; and determining, within the first processing time period measured from the last instance of processing the first signal 38 at the first frequency, which one or more signals 38, 40 to process at the next instance of processing by comparing respective parameters of at least the first and second signals 38, 40.

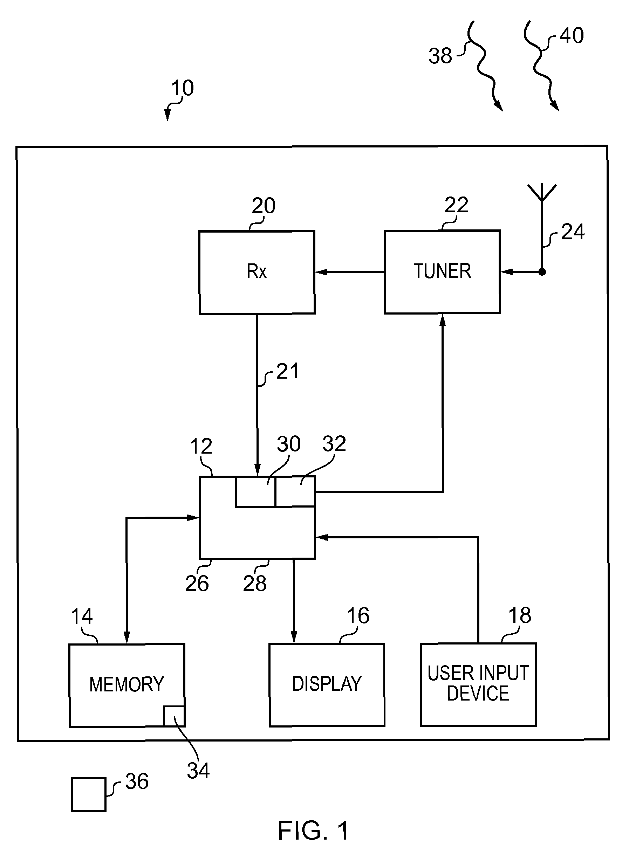

In more detail, Fig. 1 illustrates a schematic diagram of an apparatus 10 according to various embodiments of the present invention. The apparatus 10 may include a controller 12, a memory 14, a display 16, a user input device 18, a receiver 20, a tuner 22 and an antenna element 24.

The apparatus 10 may be any electronic device. For example, the apparatus 10 may be a base station, a personal computer or a portable apparatus such as a mobile cellular telephone, laptop computer, personal digital assistant (PDA) or palmtop computer. The apparatus 10 may also be a module or a chipset. As used here 'module' refers to a unit or apparatus that excludes certain parts/components that would be added by an end manufacturer or a user. In the following embodiment which is described in detail with reference to Fig. 1, the apparatus 10 is a mobile cellular telephone.

The controller 12 may be any suitable processor and may be a microprocessor. The implementation of the controller 12 can be in hardware alone (e.g. a circuit, a processor etc...), have certain aspects in software including firmware alone or can be a combination of hardware and software (including firmware). The controller 12 may be implemented using instructions that enable hardware functionality, for example, by using executable computer program instructions in a general-purpose or special-purpose processor that may be stored on a computer readable storage medium (e.g. disk, memory etc) to be executed by such a processor.

The controller 12 is configured to read from and write to the memory 14. The controller 12 may also comprise an output interface 26 via which data and/or commands are output by the controller 12 and an input interface 28 via which data and/or commands are input to the controller 12.

In various embodiments of the present invention, the controller 12 includes a first controller module 30 and a second controller module 32. It should be appreciated that the first and second controller modules 30, 32 may be different portions of software (i.e. they may separate portions of program code) and/or may be different portions of hardware (i.e. they may be physically separate circuits).

The memory 14 may be any suitable memory and may, for example be permanent built-in memory such as flash memory or it may be a removable memory such as a hard disk, secure digital (SD) card or a micro-drive. The memory 14 may store a computer program 34 comprising computer program instructions that control the operation of the apparatus 10 when loaded into the controller 12. The computer program instructions 34 provide the logic and routines that enables the apparatus 10 to perform the methods illustrated in Figs 2, 5 and 7. The controller 12 by reading the memory 14 is able to load and execute the computer program 34.

Although the memory 14 is illustrated as a single component it may be implemented as one or more separate components some or all of which may be integrated/removable and/or may provide permanent/semi-permanent/ dynamic/cached storage.

The computer program may arrive at the apparatus 10 via any suitable delivery mechanism 36. The delivery mechanism 36 may be, for example, a computer-readable storage medium, a computer program product, a memory device, a record medium such as a CD-ROM or DVD, an article of manufacture that tangibly embodies the computer program 34. The delivery mechanism 36 may be a signal configured to reliably transfer the computer program 34. The apparatus 10 may propagate or transmit the computer program 34 as a computer data signal.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (e.g. Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The computer program instructions provide: computer readable program means 34 for processing at a first processing frequency, such that each instance of processing is separated by a first processing time period, at least a first signal; computer readable program means 34 for increasing the processing frequency to a second processing frequency and switching from processing the first signal to processing a second signal; computer readable program means 34 for determining a parameter indicative of the quality of the second signal; and computer readable program means 34 for determining, within the first processing time period measured from the last instance of processing the first signal at the first frequency, which one or more signals to process at the next instance of processing by comparing respective parameters of at least the first and second signals.

The display 16 is configured to receive and display data from the controller 12. The controller 12 may read data from the memory 14 and provide it to the display 16 for display to a user of the apparatus 10. The display 16 may be any suitable display and may be for example, a thin film transistor (TFT) display or a liquid crystal display (LCD).

The user input device 18 is operable by a user to provide control signals to the controller 12. For example, the user input device 18 may be operable by a user of the apparatus 10 to control a graphical user interface displayed on the display 16. The user input device 18 may be a keypad of the mobile cellular telephone 10 or may be incorporated into the display 16 to provide a touch screen display. The user input device 18 may include a microphone and may allow a user to control what is presented on the display 16 using his or her voice.

The receiver 20 is configured to decode signals received at the antenna element 24 and provide them to the first controller module 30 for processing. The receiver 20 may be connected to the controller 12 via a single transmission line 21 (i.e. a single RF channel). In some embodiments of the present invention, the apparatus 10 includes a transceiver 20 instead of a receiver.

The tuner 22 is configured to adapt the impedance of the antenna element 24 and thereby adapt the operational resonant frequency band of the antenna element 24. In various embodiments, the tuner 22 is configured to adapt the operational resonant frequency band of the antenna element 24 between a first operational frequency band and a second, different, operational frequency band. It should be appreciated however that the tuner 22 may be configured to adapt the operational resonant frequency band of the antenna element 24 so that it is operable in more than two different operational frequency bands.

The tuner 22 may include any suitable circuitry for affecting the above mentioned change in impedance for the antenna element 24. For example, the tuner 22 may include a plurality of reactive components and at least one switch for selecting the reactive components. The reactive components may include, for example, transmission lines, capacitors and inductors.

The antenna element 24 may be any suitable antenna element and may be, for example, a planar inverted F antenna (PIFA), an inverted F antenna (IFA), a planar inverted L antenna (PILA), an inverted L antenna (ILA), a loop antenna, a helical antenna, a monopole antenna, a dipole antenna or a whip antenna.

The antenna element 24 may be operable to efficiently receive radio frequency signals 38, 40 in any operational radio frequency band or according to any radio frequency protocol. For example, the antenna element 24 may be operable in any one or more of the following operational frequency bands and protocols: AM radio (0.535-1.705 MHz); FM radio (76-108 MHz); Bluetooth (2400-2483.5 MHz); WLAN (2400-2483.5 MHz); HLAN (5150-5850 MHz); GPS (1176.45 MHz, 1227.6 MHz & 1570.42-1580.42 MHz); US-GSM 850 (824-894 MHz); EGSM 900 (880-960 MHz); EU-WCDMA 900 (880-960 MHz); PCN/DCS 1800 (1710-1880 MHz); US-WCDMA 1900 (1850-1990 MHz); WCDMA 2100 (Tx: 1920-1980 MHz Rx: 2110-2180 MHz); PCS1900 (1850-1990 MHz); UWB Lower (3100-4900 MHz); UWB Upper (6000-10600 MHz); DVB-H (470-702 MHz); DVB-H US (1670-1675 MHz); DRM (0.15-30 MHz); Wi Max (2300-2400 MHz, 2305-2360 MHz, 2496-2690 MHz, 3300-3400 MHz, 3400-3800 MHz, 5250-5875 MHz); DAB (174.928-239.2 MHz, 1452.96- 1490.62 MHz); RFID LF (0.125-0.134 MHz); RFID HF (13.56-13.56 MHz); RFID UHF (433 MHz, 865-956 MHz, 2450 MHz). It should be appreciated that the antenna element 24 may be operable in operational frequency bands and protocols different to those mentioned in the above list. An operational frequency band is a frequency range over which an antenna can efficiently operate. Efficient operation occurs, for example, when the antenna element's 24 insertion loss S11 is greater than an operational threshold such as 4dB or 6dB.

In the following embodiment, the tuner 22 is configured to adapt the resonant frequency band of the antenna element 24 between a first operational frequency band at 1227.6 MHz and a second operational frequency band at 1575.42 MHz. Consequently, the antenna element 24 may be adapted to receive a first (GPS) signal 38 at 1227.6 MHz and a second (GPS) signal 40 at 1575.42 MHz.

In the following embodiment, the first controller module 30 is a measurement processor and the second controller module 32 is a position processor. The measurement processor 30 is configured to read and process the first and second signals 38, 40 from the output of the receiver 20 and provide them to the position processor 32. The position processor 32 is configured to process the first and second signals 38, 40 and control the display 16 to display navigational information (such as global position and velocity) in the first and second signals 38, 40 to a user of the apparatus 10.

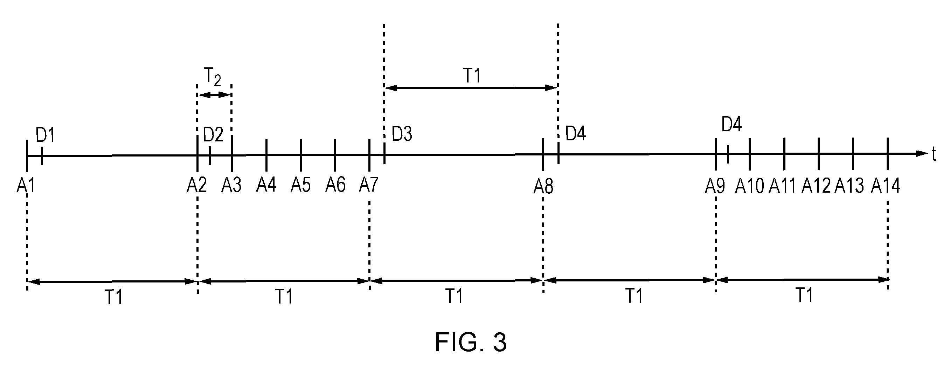

With reference to Figs. 2 and 3, at block 42, the antenna element 24 is operable in the first operational frequency band at 1227.6 MHz and consequently receives the first GPS signal 38. The first GPS signal 38 is then provided to the receiver 20 for decoding. The measurement processor 30 reads and processes the output of the receiver 20 at a first processing frequency so that each instance of processing is separated by a first processing period T1.

With reference to Fig. 3, the measurement processor 30 reads and processes the first GPS signal 38 at instance A1 and provides the first GPS signal 38 to the position processor 32. The position processor 32 then controls the display 16 to display navigational information in the first signal 38 at instance D1. At a time T1 later, the measurement processor 30 reads and processes the first GPS signal 38 at instance A2 and provides the first GPS signal 38 to the position processor 32 for display on the display 16 at instance D2. It should be appreciated that each instance of display D1, D2, D3 and D4 may also be separated from one another by the time T1.

At block 44, after instance A2, the position processor 32 sends a control signal to the measurement processor 30 to increase the rate of processing from the first processing frequency to a second processing frequency so that each instance of processing is separated by a second processing period T2. In the present embodiment, the first processing frequency is 1 Hz and the second processing frequency is 5 Hz. Consequently, at instances A3, A4, A5, A6 and A7, the measurement processor 30 is configured to read and process the output from the receiver 20. The instances A3, A4, A5, A6 and A7 are separated from one another by the second processing period, T2.

At block 46, the position processor 32 controls the tuner 22 to change the operational resonant frequency band of the antenna element 24 from the first operational frequency band to the second operational frequency band (i.e. from 1227.6 MHz to 1575.42 MHz). Then, at instances A3, A4, A5 and A6, the measurement processor 30 reads and processes the second signal 40 and provides the second signal to the position processor 32.

At block 48, the position processor 32 determines a parameter indicative of the quality of the second signal 40 between instances A6 and A7 and within the first processing period as measured from the last instance at processing at the first processing frequency (i.e. A2). In the present embodiment, the position processor 32 determines the average signal to noise ratio of the second signal 32 as measured from the instances of processing at A3, A4, A5 and A6.

At block 50, the position processor 32 determines which signal to process at the next instance of processing (A7) by comparing the determined parameter of the second signal against a parameter indicative of the quality of the first signal 38 (e.g. the signal to noise ratio of the first signal 38). The signal to process at the next instance of processing may be signal which has the highest quality (e.g. the highest signal to noise ratio).

In this embodiment, the parameter indicative of the quality of the first signal is determined by the position processor 32 using the received first signal at instances A1 and A2. However, it should be appreciated that in other embodiments, the position processor 32 may control the tuner 22 (at block 46) to change the operational resonant frequency band of the antenna element 24 back to the first operational resonant frequency band for instances A5 and A6 so that the parameter of the first signal 38 may be determined from instances A5 and A6 (i.e. when processing at the second processing frequency and within the first processing period as measured from the last instance at processing at the first processing frequency).

At block 52, the position processor 32 selects which signal to process at the next instance of processing (A7) by controlling the tuner 22 to provide the antenna element 24 with an impedance so that it is operational to receive either the first signal 38 or the second signal 40 depending on which signal is determined to have the highest quality.

The measurement processor 30 then reads and processes the selected signal at instance A7 and provides it to the position processor 32 for display on the display at D3. The position processor 32 also provides a control signal to the measurement processor 30 to decrease the processing frequency from the second processing frequency to the first processing frequency after instance A7 (i.e. after the expiry of the first processing period as measured from the last instance at processing at the first processing frequency).

It should be appreciated that the above method may be repeated periodically or whenever requested by the position processor 32. In the present embodiment, the above method is repeated periodically at every 2 X T1 seconds (at instances A10, A11, A12, A13 and A14 as illustrated in Fig. 3).

Consequently, the controller 12 may determine and select which signal to receive from the antenna 24 within the first processing period T1 as measured from the last instance of processing at the first processing frequency. This may provide an advantage if the first and second signals 38, 40 have different quality (e.g. different signal to noise ratios) because they may enable the controller 12 to select the signal with the highest quality signal. Additionally, since the determination and selection is performed within the first processing period, embodiments of the present invention may not affect the presentation of information in the signals to the user.

For example, where the first and second signals 38, 40 include navigational information for display on the display 16, the controller 12 may determine which signal to use without affecting the display of that information on the display 14 (since the determination and selection is performed between each instance of presentation). Therefore, embodiments of the present invention may increase the reliability of an apparatus 10 in providing information to a user since the selection of the highest quality signal may not affect the presentation of the information.

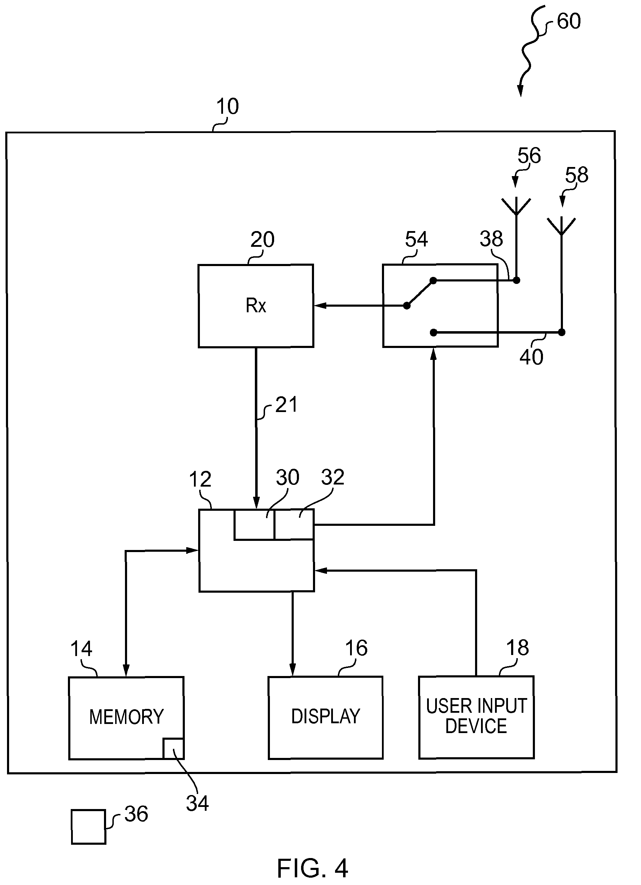

Fig. 4 illustrates a schematic diagram of another apparatus according to various embodiments of the present invention. The apparatus 10 illustrated in Fig. 4 is similar to the apparatus illustrated in Fig. 1 and where the features are similar, the same reference numerals are used. The apparatus 10 illustrated in Fig. 4 differs from the apparatus illustrated in Fig. 1 in that the tuner 22 and the antenna element 24 are replaced with a switch 54, a first antenna element 56 and a second antenna element 58.

In this embodiment, the apparatus 10 is configured to receive a GPS signal 60 which is in a first operational frequency band (e.g. 1575.42 MHz). The first and second antenna elements 56 and 58 are both operable in the first operational frequency band and are hence both configured to receive the GPS signal 60. The first antenna element 56 is configured to provide a first signal 38 to the receiver 20 and the second antenna element 58 is configured to provide a second signal 40 to the receiver 20.

The first and second antenna element 56, 58 may be positioned in different locations in the apparatus 10. For example, where the apparatus is a mobile cellular telephone, the first antenna element 56 may be positioned at the top edge of the mobile telephone (e.g. near the loudspeaker) and the second antenna element 58 may be positioned at the bottom edge of the mobile telephone (e.g. near the microphone).

The first and second antenna elements 56, 58 are connected to the receiver 20 via the switch 54. The position processor 32 is configured to control the switch 54 so that either the first antenna element 56 is connected to the receiver 20 or so that the second antenna element 58 is connected to the receiver 20. Consequently, the position processor 32 is configured to control which signal of the first and second signal 38, 40 that the receiver 20 receives.

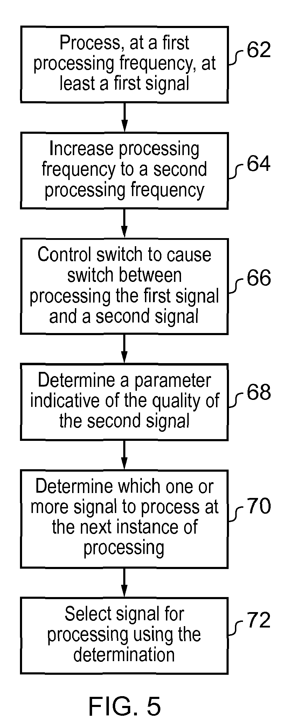

Fig. 5 illustrates a flow chart of a method for the apparatus illustrated in Fig. 4 according to various embodiments of the present invention. With reference to Figs. 3 and 5, at block 62, the first antenna element 56 is connected to the receiver 20 via the switch 54 and consequently, the receiver 20 receives the first signal 38 for decoding. The measurement processor 30 reads and processes the output of the receiver 20 at a first processing frequency so that each instance of processing is separated by a first processing period T1.

With reference to Fig. 3, the measurement processor 30 reads and processes the first signal 38 at instance A1 and provides the first signal 38 to the position processor 32. The position processor 32 then controls the display 16 to display navigational information in the first signal 38 at instance D1. At a time T1 later, the measurement processor 30 reads and processes the first signal 38 at instance A2 and provides the first signal 38 to the position processor 32 for display on the display 16 at instance D2. It should be appreciated that each instance of display D1, D2, D3 and D4 may also be separated from one another by the time T1.

At block 64, after instance A2, the position processor 32 sends a control signal to the measurement processor 30 to increase the rate of processing from the first processing frequency to a second processing frequency so that each instance of processing is separated by a second processing period T2. In the present embodiment, the first processing frequency is 1 Hz and the second processing frequency is 5 Hz. Consequently, at instances A3, A4, A5, A6 and A7, the measurement processor 30 is configured to read and process the output from the receiver 20 at the second processing frequency. The instances A3, A4, A5, A6 and A7 are separated by the second processing period, T2.

At block 66, the position processor 32 controls the switch 54 to switch from connecting to the first antenna element 56 to the second antenna element 58. Then, at instances A3, A4, A5 and A6, the measurement processor 30 reads and processes the second signal 40 and provides the second signal to the position processor 32.

At block 68, the position processor 32 determines a parameter indicative of the quality of the second signal 40 between instances A6 and A7 and within the first processing period as measured from the last instance of processing at the first processing frequency (i.e. A2). In the present embodiment, the position processor 32 determines the average signal to noise ratio of the second signal 32 as measured from the instances of processing at A3, A4, A5 and A6.

At block 70, the position processor 32 determines which signal to process at the next instance of processing (A7) by comparing the determined parameter of the second signal against a parameter indicative of the quality of the first signal 38 (e.g. the signal to noise ratio of the first signal 38). The signal to process at the next instance of processing may be signal which has the highest quality (e.g. the highest signal to noise ratio).

In this embodiment, the parameter indicative of the quality of the first signal is determined by the position processor 32 using the received first signal at instances A1 and A2. However, it should be appreciated that in other embodiments, the position processor 32 may control the switch (at block 66) to connect the receiver 20 to the first antenna element 56 and hence receive the first signal 38 for instances A5 and A6 so that the parameter of the first signal 38 may be determined from instances A5 and A6 (i.e. when processing at the second processing frequency and within the first processing period as measured from the last instance of processing at the first processing frequency).

At block 72, the position processor 32 selects which signal to process at the next instance of processing (A7) by controlling the switch 22 to connect the selected antenna element to the receiver 20 depending on which signal is determined to have the highest quality.

The measurement processor 30 then reads and processes the signal from the selected antenna element at instance A7 and provides it to the position processor 32 for display on the display at instance D3. The position processor 32 also provides a control signal to the measurement processor 30 to decrease the processing frequency from the second processing frequency to the first processing frequency after instance A7.

It should be appreciated that the above method may be repeated periodically or whenever requested by the position processor 32. In the present embodiment, the above method is repeated periodically at every 2 X T1 seconds (at instances A10, A11, A12, A13 and A14 as illustrated in Fig. 3).

Consequently, the controller 12 may determine and select which antenna element to receive signals from within the first processing period T1. This may provide an advantage if the first and second signals 38, 40 have different quality because they may enable the controller 12 to select the antenna with the best reception performance. Additionally, since the determination and selection of the antenna element is performed within the first processing period, embodiments of the present invention may not affect the presentation of information in the signals to the user. It should be appreciated that the quality of a signal received by an antenna element may be affected by the orientation of the apparatus (and hence the orientation of the antenna elements) relative to the source of the signals. Additionally, the signal quality of an antenna element may be affected by the proximity of objects to the antenna element which electromagnetically couple to the antenna element and cause interference.

As an example, where the first and second signals 38, 40 include navigational information for display on the display 16, the controller 12 may determine which antenna element to use without affecting the display of that information on the display 14 (since the determination and selection is performed between each instance of presentation). Therefore, embodiments of the present invention may increase the reliability of an apparatus 10 in providing information to a user since the selection of the antenna with the best signal quality may not affect the presentation of the information.

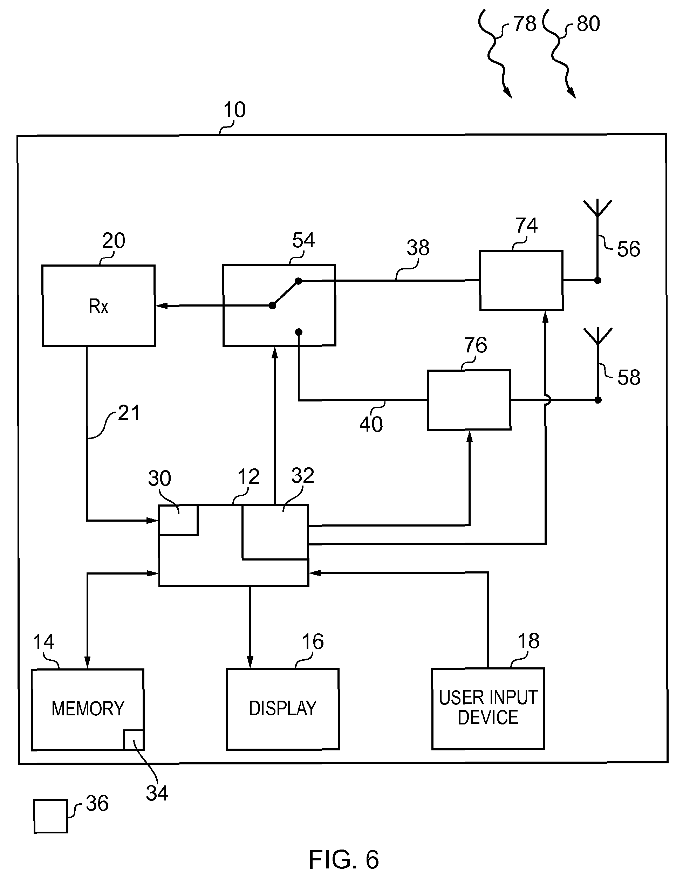

Fig. 6 illustrates a schematic diagram of a further apparatus according to various embodiments of the present invention. The apparatus 10 illustrated in Fig. 6 is similar to the apparatus illustrated in Fig. 4 and where the features are similar, the same reference numerals are used. The apparatus 10 illustrated in Fig. 6 differs from the apparatus illustrated in Fig. 4 in that the first antenna element 56 is connected to the switch 54 via a first tuner 74 and that the second antenna element 58 is connected to the switch 54 via a second tuner 76.

The first tuner 74 is configured to adapt the operational resonant frequency band of the first antenna element 56 between a first operational frequency band at 1227.6 MHz and a second operational frequency band at 1575.42 MHz. Consequently, the first antenna element 56 may be adapted to receive a GPS signal 78 at 1227.6 MHz and a GPS signal 80 at 1575.42 MHz. The second tuner 76 is configured to adapt the operational resonant frequency band of the second antenna element 58 between a first operational frequency band at 1227.6 MHz and a second operational frequency band at 1575.42 MHz. Consequently, the second antenna element 58 may be adapted to receive the GPS signal 78 at 1227.6 MHz and the GPS signal 80 at 1575.42 MHz. The position processor 32 may be configured to control the first tuner 74 and the second tuner 76 to adapt the operational resonant frequency band of the first antenna element 56 and the second antenna element 58 respectively.

In this embodiment, the first antenna element 56 is configured to provide a first signal 38 to the receiver 20 and the second antenna element 58 is configured to provide a second signal 40 to the receiver 20. The first and second antenna element 56, 58 may be positioned in different locations in the apparatus 10. For example, where the apparatus is a mobile cellular telephone, the first antenna element 56 may be positioned at the top edge of the mobile telephone (e.g. near the loudspeaker) and the second antenna element 58 may be positioned at the bottom edge of the mobile telephone (e.g. near the microphone).

The first and second antenna elements 56, 58 are connected to the receiver 20 via the switch 54. The position processor 32 is configured to control the switch 54 so that either the first antenna element 56 is connected to the receiver 20 or so that the second antenna element 58 is connected to the receiver 20. Consequently, the position processor 32 is configured to control which signal of the first and second signal 38, 40 that the receiver 20 receives.

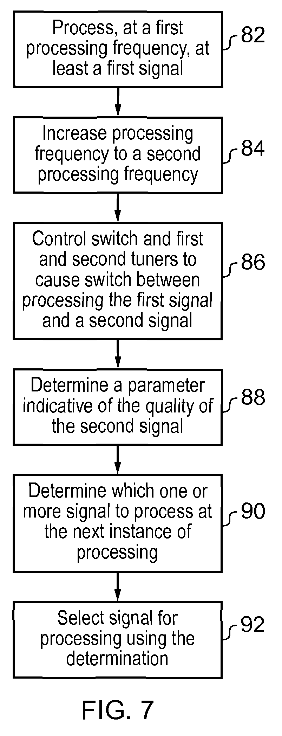

Fig. 7 illustrates a flow chart of a method for the apparatus illustrated in Fig. 6 according to various embodiments of the present invention. With reference to Figs. 3 and 7, at block 82, the first antenna element 56 is connected to the receiver 20 via the switch 54 and consequently, the receiver 20 receives the first signal 38 for decoding. The first tuner 74 is configured to adapt the operational resonant frequency band of the first antenna element 56 so that it is equal to the first operational frequency band and consequently, the antenna element 56 is configured to receive the signal 78. The measurement processor 30 reads and processes the output of the receiver 20 at a first processing frequency so that each instance of processing is separated by a first processing period T1.

With reference to Fig. 3, the measurement processor 30 reads and processes the first signal 38 at instance A1 and provides the first signal 38 to the position processor 32. The position processor 32 then controls the display 16 to display navigational information in the first signal 38 at instance D1. At a time T1 later, the measurement processor 30 reads and processes the first signal 38 at instance A2 and provides the first signal 38 to the position processor 32 for display on the display 16 at instance D2. It should be appreciated that each instance of display D1, D2, D3 and D4 may also be separated from one another by the time T1.

At block 84, after instance A2, the position processor 32 sends a control signal to the measurement processor 30 to increase the rate of processing from the first processing frequency to a second processing frequency so that each instance of processing is separated by a second processing period T2. In the present embodiment, the first processing frequency is 1 Hz and the second processing frequency is 5 Hz. Consequently, at instances A3, A4, A5, A6 and A7, the measurement processor 30 is configured to read and process the output from the receiver 20 at the second processing frequency. The instances A3, A4, A5, A6 and A7 are separated by the second processing period, T2.

At block 86, the position processor 32 controls the switch 54 to switch from connecting to the first antenna element 56 to the second antenna element 58. Then, at instances A3, A4, A5 and A6, the measurement processor 30 reads and processes the second signal 40 and provides the second signal to the position processor 32. It should be appreciated that the position processor 32 may also control the second tuner 76 to adapt the operational resonant frequency band of the second antenna element 58 so that it receives the GPS signal 78 for some of the instances (e.g. instances A3 and A4) and so that it receives the GPS signal 80 for the remaining instances (e.g. instances A5 and A6).

At block 88, the position processor 32 determines a parameter indicative of the quality of the second signal 40 between instances A6 and A7 and within the first processing period as measured from the last instance of processing at the first processing frequency (i.e. A2). In the present embodiment, the position processor 32 determines the average signal to noise ratio of the second signal 32 as measured from the instances of processing at A3, A4, A5 and A6. In the above embodiment where the second antenna element 58 receives the signal 78 and the signal 80 at instances A3, A4, A5 and A6, the position processor 32 may determine a parameter indicative of the quality of the signal 78 as received at the second antenna element 58 and a parameter indicative of the quality of the signal 80 as received at the second antenna element 58.

At block 90, the position processor 32 determines which signal to process at the next instance of processing (A7) by comparing the determined parameter(s) of the second signal against a parameter(s) indicative of the quality of the first signal 38 (e.g. the signal to noise ratio of the first signal 38). The signal to process at the next instance of processing may be the signal which has the best quality (e.g. the highest signal to noise ratio).

In this embodiment, the parameters indicative of the quality of the first signal are determined by the position processor 32 using the received first signal 38 at instances A1 and A2. For example, the position processor 32 may determine, at instance A1, a parameter indicative of the quality of the first signal 38 when the first antenna element 54 receives the signal 78. At instance A2, the position processor 32 may determine a parameter indicative of the quality of the first signal 38 when the first antenna element 54 receives the signal 80.

However, it should be appreciated that in other embodiments, the position processor 32 may control the switch 54 (at block 86) to connect the receiver 20 to the first antenna element 56 and hence receive the first signal 38 for instances A5 and A6 (for example) so that the parameter of the first signal 38 may be determined from instances A5 and A6. In one embodiment, the position processor 32 may control the switch 54 and the first and second tuners 74, 76 so that at instance A3, the receiver 20 receives signal 78 as the second signal 40, at instance A4, the receiver 20 receives signal 80 as the second signal 40, at instance A5, the receiver 20 receives signal 78 as the first signal 38 and at instance A6, the receiver 20 receives signal 80 as the first signal 38.

At block 92, the position processor 32 selects which signal to process at the next instance of processing (A7) by controlling the switch 54 to connect the selected antenna element to the receiver 20 depending on which antenna element is determined to have the highest signal quality. The position processor 32 may also control the tuner 74, 76 connected to the selected antenna to select the best operational resonant frequency band for the selected antenna.

The measurement processor 30 then reads and processes the signal from the selected antenna element at the selected operational resonant frequency band at instance A7 and provides it to the position processor 32 for display on the display at D3. The position processor 32 also provides a control signal to the measurement processor 30 to decrease the processing frequency from the second processing frequency to the first processing frequency after instance A7.

It should be appreciated that the above method may be repeated periodically or whenever requested by the position processor 32. In the present embodiment, the above method is repeated periodically at every 2 X T1 seconds (at instances A10, A11, A12, A13 and A14 as illustrated in Fig. 3).

Consequently, the controller 12 may determine which received signal has the highest quality and select the best antenna element and the best operational frequency band for that antenna within the first processing period T1 as measured from the last instance of processing at the first processing frequency (i.e. A2). This may provide an advantage if the first and second signals 38, 40 have different quality because they may enable the controller 12 to select the antenna and the best operational frequency band with the best signal quality. Embodiments of the invention may not affect the presentation of information in the signals to the user because the determination and selection is performed within the first processing period.

As an example, where the first and second signals 38, 40 include navigational information for display on the display 16, the controller 12 may determine which antenna element and which operational resonant frequency band to use without affecting the display of that information on the display 14 (since the determination and selection is performed between each instance of presentation). Therefore, embodiments of the present invention may increase the reliability of an apparatus 10 in providing information to a user since the selection of an antenna and a operational resonant frequency band with the best signal quality may not affect the presentation of the information.

It should be appreciated that the use of word 'connect' or 'couple' may mean that two electronic components may be operationally coupled and any number or combination of intervening elements can exist between them (including no intervening elements).

The blocks illustrated in the Figs 3, 5 and 7 may represent steps in a method and/or sections of code in the computer program 34. The illustration of a particular order to the blocks does not necessarily imply that there is a required or preferred order for the blocks and the order and arrangement of the block may be varied. Furthermore, it may be possible for some steps to be omitted.

Although embodiments of the present invention have been described in the preceding paragraphs with reference to various examples, it should be appreciated that modifications to the examples given can be made without departing from the scope of the invention as claimed. For example, the apparatus 10 may include more than two antenna elements and be arranged to receive signals in more than two operational frequency bands. The position processor 32 may be configured to select the highest quality signal from more than two antenna elements and from more than two operational frequency bands.

It should be appreciated that embodiments of the invention may apply to an antenna array which includes a plurality of antenna elements. The position processor 32 may be configured to determine and select the combination of antenna elements which provide the highest quality signal reception.

A parameter indicative of the quality of a received signal may be a parameter other than the signal to noise ratio of a signal. For example, where the received signal is a GPS signal (or other Global Navigation Satellite System (GNSS) signal) a parameter indicative of the quality of a received signal may be the expected positioning accuracy calculated from the GPS satellite geometry (Dilution of Precision (DOP)). The DOP may vary between antenna elements in an apparatus because objects nearby to an antenna arrangement (e.g. a user's hand) may affect which satellites the antenna element may receive signals from. Additionally, a parameter indicative of the quality of a received signal may also be the expected positioning accuracy calculated from the average signal measurement uncertainty, the Circular Error Probable calculated from the covariance matrix weighted by measurement uncertainties, the average code phase and/or Doppler uncertainties. The position processor 32 may be configured to determine the quality of a signal by determining any combination of the parameters mentioned above. The above mentioned parameters are well known within the art and will consequently not be discussed in any greater detail.

It should be appreciated that embodiments of the present invention may be applied to signals in different operational frequency bands and different protocols to those mentioned in the above embodiments. For example, the signals may be GSM signals and the instances D1, D2, D3 etc... may be where audio output is provided to a user of the apparatus from a loudspeaker.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

## Claims

1. A method comprising:
processing at a first processing frequency, such that each instance of processing is separated by a first processing time period, at least a first signal, wherein the first signal is suitable for determining navigational information;
increasing the processing frequency to a second processing frequency and switching from processing the first signal to processing a second signal, wherein the second signal is suitable for determining navigational information;
determining a parameter indicative of the quality of the first signal;
determining a parameter indicative of the quality of the second signal;
determining, within the first processing time period measured from the last instance of processing the first signal at the first processing frequency, which of the first and second signals to process at the next instance of processing by comparing respective parameters of at least the first and second signals;
selecting one of at least the first and second signals for the next instance of processing at the first processing frequency, using the determination of which signal to process, within the first processing time period;
determining navigational information from the selected signal; and
controlling presentation of the navigational information from the selected signal such that instances of presentation are separated by the first processing time period.

2. A method as claimed in claim 1, wherein the parameter indicative of the quality of the first signal is determined from processing at the first processing frequency or at the second processing frequency.

3. A method as claimed in claim 1, comprising switching from processing the second signal to processing the first signal within the first processing time period measured from the last instance of processing the first signal at the first frequency, and determining a parameter indicative of the quality of the first signal.

4. A method as claimed in any of the preceding claims, wherein controlling presentation of the navigational information from the selected signal includes controlling a loudspeaker to provide audio output.

5. A method as claimed in claim 4, wherein controlling presentation of the navigational information from the selected signal includes controlling a display (16) to display the navigational information using the selected signal.

6. A method as claimed in any of the preceding claims, further comprising receiving the first and second signals via a single antenna element (24), wherein the first signal is In a first operational frequency band and the second signal is in a second operational frequency band, different to the first operational frequency band, and further comprising controlling a tuner (22) to adapt the resonant frequency band of the antenna element (24) between the first operational frequency band and the second operational frequency band.

7. A method as claimed in any of claims 1 to 5, further comprising receiving the first signal from a first antenna element (56) and receiving the second signal from a second antenna element (58), and further comprising controlling a switch (54) to switch between connecting to the first antenna element (56) and to the second antenna element (58) to receive the first signal or second signal respectively.

8. A method as claimed in claim 7, wherein the first signal and the second signal are in the same operational frequency band.

9. A method as claimed in claim 7, further comprising controlling a first tuner (74) to adapt the resonant frequency band of the first antenna element (56) between a first operational frequency band and a second operational frequency band, and further comprising controlling a second tuner (76) to adapt the resonant frequency band of the second antenna element (58) between a first operational frequency band and a second operational frequency band.

10. An apparatus comprising:
a first means (30) for processing at a first processing frequency, such that each instance of processing Is separated by a first processing time period, at least a first signal, wherein the first signal is suitable for determining navigational information;
a second means (32) for:
increasing the processing frequency to a second processing frequency,
switching from processing the first signal to processing a second signal, wherein the second signal is suitable for determining navigational information;
determining a parameter indicative of the quality of the first signal and determining a parameter indicative of the quality of the second signal;
determining, within the first processing time period measured from the last instance of processing the first signal at the first processing frequency, which of the first and second signals to process at the next instance of processing by comparing respective parameters of at least the first and second signals;
selecting one of at least the first and second signals for the next instance of processing at the first processing frequency, using the determination of which signal to process, within the first processing time period;
determining navigational information from the selected signal; and
controlling presentation of the navigational information from the selected signal such that Instances of presentation are separated by the first processing time period.

11. An apparatus as claimed in claim 10, wherein the parameter indicative of the quality of the first signal is determined from processing at the first processing frequency or at the second processing frequency.

12. An apparatus as claimed in claim 10, wherein the second means (32) is configured to control switching from processing the second signal to processing the first signal within the first processing time period measured from the last instance of processing the first signal at the first frequency.

13. An apparatus as claimed in any of claims 10 to 12, wherein the second means (32) is configured to control presentation of the navigational information from the selected signal by controlling a display (16) to display the navigational information using the selected signal.

14. A computer program that, when run on a computer, performs:
processing at a first processing frequency, such that each instance of processing is separated by a first processing time period, at least a first signal, wherein the first signal is suitable for determining navigational information;
increasing the processing to a second processing frequency and switching from processing the first signal to processing a second signal, wherein the second signal is suitable for determining navigational information;
determining a parameter indicative of the quality of the first signal;
determining a parameter indicative of the quality of the second signal; and
determining, within the first processing time period measured from the last instance of processing the first signal at the first processing frequency, which of the first and second signals to process at the next instance of processing by comparing respective parameters of at least the first and second signals;
selecting one of at least the first and second signals for the next instance of processing at the first processing frequency, using the determination of which signal to process, within the first processing time period;
determining navigational information from the selected signal; and
controlling presentation of the navigational information from the selected signal such that instances of presentation are separated by the first processing time period.

15. A computer program as claimed in claim 14, wherein controlling presentation of the navigational information from the selected signal includes controlling a display (16) to display the navigational information using the selected signal.

## Patentansprüche

1. Verfahren, das Folgendes umfasst:
Verarbeiten zumindest eines ersten Signals bei einer ersten Verarbeitungsfrequenz, derart, dass jede Verarbeitungsinstanz durch einen ersten Verarbeitungszeitraum getrennt ist, wobei das erste Signal für das Bestimmen von Navigationsinformationen geeignet ist;
Erhöhen der Verarbeitungsfrequenz zu einer zweiten Verarbeitungsfrequenz und Umschalten von dem Verarbeiten des ersten Signals zu dem Verarbeiten eines zweiten Signals, wobei das zweite Signal für das Bestimmen von Navigationsinformationen geeignet ist;
Bestimmen eines Parameters, der die Qualität des ersten Signals anzeigt;
Bestimmen eines Parameters, der die Qualität des zweiten Signals anzeigt;
Bestimmen, welches des ersten und zweiten Signals bei der nächsten Verarbeitungsinstanz verarbeitet werden soll, durch Vergleichen der entsprechenden Parameter zumindest des ersten und des zweiten Signals, innerhalb des ersten Verarbeitungszeitraums, der von der letzten Verarbeitungsinstanz des ersten Signals bei der ersten Verarbeitungsfrequenz gemessen wird;
Auswählen eines des zumindest ersten und zweiten Signals für die nächste Verarbeitungsinstanz bei der ersten Verarbeitungsfrequenz, unter Verwendung der Bestimmung, welches Signal innerhalb des ersten Verarbeitungszeitraums verarbeitet werden soll;
Bestimmen von Navigationsinformationen aus dem ausgewählten Signal; und
Steuern der Darstellung der Navigationsinformationen aus dem ausgewählten Signal derart, dass die Darstellungsinstanzen durch den ersten Verarbeitungszeitraum getrennt sind.

2. Verfahren nach Anspruch 1, wobei der Parameter, der die Qualität des ersten Signals anzeigt, durch Verarbeiten bei der ersten Verarbeitungsfrequenz oder bei der zweiten Verarbeitungsfrequenz bestimmt wird.

3. Verfahren nach Anspruch 1, das das Umschalten von dem Verarbeiten des zweiten Signals zu dem Verarbeiten des zweiten Signals innerhalb des ersten Verarbeitungszeitraums, der von der letzten Verarbeitungsinstanz des ersten Signals bei der ersten Verarbeitungsfrequenz gemessen wird, und das Bestimmen eines Parameters, der die Qualität des ersten Signals anzeigt, umfasst.

4. Verfahren nach einem der vorhergehenden Ansprüche, wobei das Steuern der Darstellung der Navigationsinformationen aus dem ausgewählten Signal das Steuern eines Lautsprechers zum Bereitstellen einer Audioausgabe umfasst.

5. Verfahren nach Anspruch 4, wobei das Steuern der Darstellung der Navigationsinformationen aus dem ausgewählten Signal das Steuern einer Anzeigevorrichtung (16) zum Anzeigen der Navigationsinformationen unter Verwendung des ausgewählten Signals umfasst.

6. Verfahren nach einem der vorhergehenden Ansprüche, das ferner das Empfangen des ersten und zweiten Signals über ein einzelnes Antennenelement (24) umfasst, wobei das erste Signal in einem ersten Betriebsfrequenzband liegt und das zweite Signal in einem zweiten Betriebsfrequenzband liegt, das sich von dem ersten Betriebsfrequenzband unterscheidet, und das ferner das Steuern einer Abstimmvorrichtung (22) umfasst, um das Resonanzfrequenzband des Antennenelements (24) zwischen dem ersten Betriebsfrequenzband und dem zweiten Betriebsfrequenzband abzustimmen.

7. Verfahren nach einem der Ansprüche 1 bis 5, das ferner das Empfangen des ersten Signals von einem ersten Antennenelement (56) und das Empfangen des zweiten Signals von einem zweiten Antennenelement (58) umfasst, und das ferner das Steuern eines Schalters (54) umfasst, um zwischen dem Verbinden mit dem ersten Antennenelement (56) und mit dem zweiten Antennenelement (58) umzuschalten, um das erste bzw. das zweite Signal zu empfangen.

8. Verfahren nach Anspruch 7, wobei das erste Signal und das zweite Signal in dem selben Betriebsfrequenzband liegen.

9. Verfahren nach Anspruch 7, das ferner das Steuern einer ersten Abstimmvorrichtung (74) umfasst, um das Resonanzfrequenzband des ersten Antennenelements (56) zwischen einem ersten Betriebsfrequenzband und einem zweiten Betriebsfrequenzband abzustimmen, und das ferner das Steuern einer zweiten Abstimmvorrichtung (76) umfasst, um das Resonanzfrequenzband des zweiten Antennenelements (58) zwischen einem ersten Betriebsfrequenzband und einem zweiten Betriebsfrequenzband abzustimmen.

10. Vorrichtung, die Folgendes umfasst:
erste Mittel (30) zum Verarbeiten zumindest eines ersten Signals bei einer ersten Verarbeitungsfrequenz derart, dass jede Verarbeitungsinstanz durch einen ersten Verarbeitungszeitraum getrennt ist, wobei das erste Signal für das Bestimmen von Navigationsinformationen geeignet ist;
zweite Verarbeitungsmittel (32) zum:
Erhöhen der Verarbeitungsfrequenz zu einer zweiten Verarbeitungsfrequenz;
Umschalten von dem Verarbeiten des ersten Signals zu dem Verarbeiten eines zweiten Signals, wobei das zweite Signal für das Bestimmen von Navigationsinformationen geeignet ist;
Bestimmen eines Parameters, der die Qualität des ersten Signals anzeigt und Bestimmen eines Parameters, der die Qualität des zweiten Signals anzeigt;
Bestimmen, welches des ersten und zweiten Signals bei der nächsten Verarbeitungsinstanz verarbeitet werden soll durch Vergleichen der entsprechenden Parameter zumindest des ersten und des zweiten Signals, innerhalb des ersten Verarbeitungszeitraums, der von der letzten Verarbeitungsinstanz des ersten Signals bei der ersten Verarbeitungsfrequenz gemessen wird;
Auswählen eines des zumindest ersten und zweiten Signals für die nächste Verarbeitungsinstanz, unter Verwendung der Bestimmung, welches Signal innerhalb des ersten Verarbeitungszeitraums verarbeitet werden soll;
Bestimmen von Navigationsinformationen aus dem ausgewählten Signal; und
Steuern der Darstellung der Navigationsinformationen aus dem ausgewählten Signal derart, dass die Darstellungsinstanzen durch den ersten Verarbeitungszeitraum getrennt sind.

11. Vorrichtung nach Anspruch 10, wobei der Parameter, der die Qualität des ersten Signals anzeigt, durch Verarbeiten bei der ersten Verarbeitungsfrequenz oder bei der zweiten Verarbeitungsfrequenz bestimmt wird.

12. Vorrichtung nach Anspruch 10, wobei die zweiten Mittel (32) konfiguriert sind, das Umschalten von dem Verarbeiten des zweiten Signals zu dem Verarbeiten des zweiten Signals innerhalb des ersten Verarbeitungszeitraums, der von der letzten Verarbeitungsinstanz des ersten Signals bei der ersten Verarbeitungsfrequenz gemessen wird, zu steuern.

13. Vorrichtung nach einem der Ansprüche 10 bis 12, wobei die zweiten Mittel (32) konfiguriert sind, die Darstellung der Navigationsinformationen aus dem ausgewählten Signal durch Steuern einer Anzeigevorrichtung (16) zum Anzeigen der Navigationsinformationen unter Verwendung des ausgewählten Signals, zu steuern.

14. Computerprogramm, das dann, wenn es auf einem Computer ausgeführt wird, Folgendes durchführt:
Verarbeiten zumindest eines ersten Signals bei einer ersten Verarbeitungsfrequenz derart, dass jede Verarbeitungsinstanz durch einen ersten Verarbeitungszeitraum getrennt ist, wobei das erste Signal für das Bestimmen von Navigationsinformationen geeignet ist;
Erhöhen der Verarbeitungsfrequenz zu einer zweiten Verarbeitungsfrequenz und Umschalten von dem Verarbeiten des ersten Signals zu dem Verarbeiten eines zweiten Signals, wobei das zweite Signal für das Bestimmen von Navigationsinformationen geeignet ist;
Bestimmen eines Parameters, der die Qualität des ersten Signals anzeigt;
Bestimmen eines Parameters, der die Qualität des zweiten Signals anzeigt; und
Bestimmen, welches des ersten und zweiten Signals bei der nächsten Verarbeitungsinstanz verarbeitet werden soll durch Vergleichen der entsprechenden Parameter zumindest des ersten und des zweiten Signals, innerhalb des ersten Verarbeitungszeitraums, der von der letzten Verarbeitungsinstanz des ersten Signals bei der ersten Verarbeitungsfrequenz gemessen wird;
Auswählen eines des zumindest ersten und zweiten Signals für die nächste Verarbeitungsinstanz, unter Verwendung der Bestimmung, welches Signal innerhalb des ersten Verarbeitungszeitraums verarbeitet werden soll;
Bestimmen von Navigationsinformationen aus dem ausgewählten Signal; und
Steuern der Darstellung der Navigationsinformationen aus dem ausgewählten Signal derart, dass die Darstellungsinstanzen durch den ersten Verarbeitungszeitraum getrennt sind.

15. Computerprogramm nach Anspruch 14, wobei das Steuern der Darstellung der Navigationsinformationen aus dem ausgewählten Signal das Steuern einer Anzeigevorrichtung (16) zum Anzeigen der Navigationsinformationen unter Verwendung des ausgewählten Signals umfasst.

## Revendications

1. Procédé comprenant :
le traitement à une première fréquence de traitement, de telle sorte que chaque instance de traitement soit séparée par une première période de temps de traitement, d'au moins un premier signal, le premier signal convenant à la détermination d'informations de navigation ;
l'augmentation de la fréquence de traitement à une seconde fréquence de traitement et la commutation du traitement du premier signal au traitement d'un second signal, le second signal convenant à la détermination d'informations de navigation ;
la détermination d'un paramètre indicatif de la qualité du premier signal ;
la détermination d'un paramètre indicatif de la qualité du second signal ;
la détermination, dans la première période de temps de traitement mesurée à partir de la dernière instance de traitement du premier signal à la première fréquence de traitement, de celui du premier et du second signal à traiter à l'instance de traitement suivante en comparant des paramètres respectifs d'au moins les premier et second signaux ;
la sélection de l'un d'au moins les premiers et second signaux pour l'instance de traitement suivante à la première fréquence de traitement, en utilisant la détermination du signal à traiter, dans la première période de temps de traitement ;
la détermination d'informations de navigation du signal sélectionné ; et
la commande de la présentation des informations de navigation du signal sélectionné de telle sorte que les instances de présentation soient séparées par la première période de temps de traitement.

2. Procédé selon la revendication 1, dans lequel le paramètre indicatif de la qualité du premier signal est déterminé par le traitement à la première fréquence de traitement ou à la seconde fréquence de traitement.

3. Procédé selon la revendication 1, comprenant la commutation du traitement du second signal au traitement du premier signal dans la période de temps de traitement mesurée à partir de la dernière instance de traitement du premier signal à la première fréquence, et la détermination d'un paramètre indicatif de la qualité du premier signal.

4. Procédé selon l'une quelconque des revendications précédentes, dans lequel la commande de la présentation des informations de navigation du signal sélectionné comporte la commande d'un haut-parleur pour produire une sortie audio.

5. Procédé selon la revendication 4, dans lequel la commande de la présentation des informations de navigation du signal sélectionné comporte la commande d'un afficheur (16) pour afficher les informations de navigation en utilisant le signal sélectionné.

6. Procédé selon l'une quelconque des revendications précédentes, comprenant en outre la réception des premier et second signaux par l'intermédiaire d'un élément d'antenne unique (24), dans lequel le premier signal se trouve dans une première bande de fréquences opérationnelles et le second signal se trouve dans une seconde bande de fréquences opérationnelles, différente de la première bande de fréquences opérationnelles, et comprenant en outre la commande d'un syntoniseur (22) pour adapter la bande de fréquences de résonance de l'élément d'antenne (24) entre la première bande de fréquences opérationnelles et la seconde bande de fréquences opérationnelles.

7. Procédé selon l'une quelconque des revendications 1 à 5, comprenant en outre la réception du premier signal à partir d'un premier élément d'antenne (56) et la réception du second signal à partir d'un second élément d'antenne (58) ; et comprenant en outre la commande d'un commutateur (54) pour commuter entre une connexion au premier élément d'antenne (56) et une connexion au second élément d'antenne (58) pour recevoir respectivement le premier signal ou le second signal.

8. Procédé selon la revendication 7, dans lequel le premier signal et le second signal se trouvent dans la même bande de fréquences opérationnelles.

9. Procédé selon la revendication 7, comprenant en outre la commande d'un premier syntoniseur (74) pour adapter la bande de fréquences de résonance du premier élément d'antenne (56) entre une première bande de fréquences opérationnelles et une seconde bande de fréquences opérationnelles, et comprenant en outre la commande d'un second syntoniseur (76) pour adapter la bande de fréquences de résonance du second élément d'antenne (58) entre une première bande de fréquences opérationnelles et une seconde bande de fréquences opérationnelles.

10. Appareil comprenant :
un premier moyen (30) pour traiter à une première fréquence de traitement, de telle sorte que chaque instance de traitement soit séparée par une première période de temps de traitement, au moins un premier signal, le premier signal convenant à la détermination d'informations de navigation ;
un second moyen (32) pour :
augmenter la fréquence de traitement à une seconde fréquence de traitement,
commuter du traitement du premier signal au traitement d'un second signal, le second signal convenant à la détermination d'informations de navigation ;
déterminer un paramètre indicatif de la qualité du premier signal et déterminer un paramètre indicatif de la qualité du second signal ;
déterminer, dans la première période de temps de traitement mesurée à partir de la dernière instance de traitement du premier signal à la première fréquence de traitement, celui du premier et du second signal à traiter à l'instance de traitement suivante en comparant des paramètres respectifs d'au moins les premier et second signaux ;
sélectionner l'un d'au moins les premiers et second signaux pour l'instance de traitement suivante à la première fréquence de traitement, en utilisant la détermination du signal à traiter, dans la première période de temps de traitement ;
déterminer des informations de navigation du signal sélectionné ; et
commander la présentation des informations de navigation du signal sélectionné de telle sorte que les instances de présentation soient séparées par la première période de temps de traitement.

11. Appareil selon la revendication 10, dans lequel le paramètre indicatif de la qualité du premier signal est déterminé par le traitement à la première fréquence de traitement ou à la seconde fréquence de traitement.

12. Appareil selon la revendication 10, comprenant le second moyen (32) est configuré pour commander la commutation du traitement du second signal au traitement du premier signal dans la période de temps de traitement mesurée à partir de la dernière instance de traitement du premier signal à la première fréquence.

13. Appareil selon l'une quelconque des revendications 10 à 12, dans lequel le second moyen (32) est configuré pour commander la présentation des informations de navigation du signal sélectionné en commandant un afficheur (16) pour afficher les informations de navigation en utilisant le signal sélectionné.

14. Programme informatique qui, à son exécution, par un ordinateur, met en oeuvre :
le traitement à une première fréquence de traitement, de telle sorte que chaque instance de traitement soit séparée par une première période de temps de traitement, d'au moins un premier signal, le premier signal convenant à la détermination d'informations de navigation ;
l'augmentation de la fréquence de traitement à une seconde fréquence de traitement et la commutation du traitement du premier signal au traitement d'un second signal, le second signal convenant à la détermination d'informations de navigation ;
la détermination d'un paramètre indicatif de la qualité du premier signal ;
la détermination d'un paramètre indicatif de la qualité du second signal ; et
la détermination, dans la première période de temps de traitement mesurée à partir de la dernière instance de traitement du premier signal à la première fréquence de traitement, de celui du premier et du second signal à traiter à l'instance de traitement suivante en comparant des paramètres respectifs d'au moins les premier et second signaux ;
la sélection de l'un d'au moins les premiers et second signaux pour l'instance de traitement suivante à la première fréquence de traitement, en utilisant la détermination du signal à traiter, dans la première période de temps de traitement ;
la détermination d'informations de navigation à partir du signal sélectionné ; et
la commande de la présentation des informations de navigation à partir du signal sélectionné de telle sorte que les instances de présentation soient séparées par la première période de temps de traitement.

15. Programme informatique selon la revendication 14, dans lequel la commande de la présentation des informations de navigation à partir du signal sélectionné comporte la commande d'un afficheur (16) pour afficher les informations de navigation en utilisant le signal sélectionné.
